# DEMANDE DE BREVET EUROPEEN

(11) **EP 0 709 154 A1**
(43) Date de publication de la demande: **01.05.1996**
(21) Numéro de dépôt: 95402394.1
(22) Date de dépôt: 26.10.1995
(51) Int. Cl.: B23C 3/35, B25B 1/22

(54) **Support d'étaux de taille de clés à panneton**

(30) Priorité: 26.10.1994 FR 9412812
(71) Demandeur: HK INDUSTRIES S.A., F-75528 Paris Cédex 11 (FR)
(72) Inventeur: Kinas, Jérôme, F-92200 Neuilly-sur-Seine (FR)
(74) Mandataire: Pinguet, André

(57) **Abrégé**

Support d'étaux de taille de clés à panneton destiné au maintien et à la manipulation d'une ébauche de clé présentant une tige dotée d'un panneton, ledit support comprenant un étrier rotatif dont l'axe de rotation est confondu avec la tige de l'ébauche de clé, caractérisé en ce que l'étrier incorpore un arbre rotatif sur lequel au moins deux étaux sont montés, chaque étau étant doté de deux mâchoires longitudinales auto-centrantes pour le serrage de la tige de l'ébauche de clé, un seul étau étant sélectivement positionné dans une position de taille dans laquelle les mâchoires dudit étau définissent un axe fictif fixe qui se confondent avec l'axe de rotation de l'étrier, ainsi qu'avec la tige de l'ébauche de clé lorsque cette dernière est serrée entre les mâchoires. Avantageusement, l'étrier rotatif est reçu dans un châssis fixe, l'étrier rotatif présentant au moins une surface de contact par roulement ou glissement qui coopère avec au moins un chemin de roulement ou de glissement défini par ledit châssis fixe pour décrire un mouvement d'arc de cercle dont le centre se confond avec l'axe de rotation de l'étrier, de sorte que l'étrier effectue un mouvement de rotation autour de la tige de l'ébauche de clé.

## Description

La présente invention concerne un support d'étaux de taille de clés à panneton servant au maintien et à la manipulation d'une ébauche de clé pendant l'opération de taille. L'invention a plus particulièrement trait à un support d'étaux de taille pour clé à gorge du type présentant une tige dotée à une extrémité d'un ou de deux pannetons latéraux. Le ou les pannetons sont entaillés de gorges plus ou moins profondes en fonction de la géométrie du penne à actionner.

Les clés, à l'état brut, se présentent sous la forme d'ébauches de clé avec un panneton entier exempt de gorge. Lors de l'opération de taille, l'ébauche de clé doit être maintenue solidement pour des raisons de précision. L'ébauche doit également pouvoir pivoter autour de la tige de l'ébauche. En effet, pour obtenir des fonds de gorges concentriques à la tige de l'ébauche, il est nécessaire de faire pivoter l'ébauche pendant l'opération de taille qui se fait en général à l'aide d'une fraise. Si l'ébauche était maintenu immobile, la fraise dégagerait des gorges dont les fonds seraient plats, c'est-à-dire tangents à des cercles fictifs centrés sur la tige de la clé. La clé étant destinée à effectuer un mouvement de rotation sur elle-même à l'intérieur de la serrure, il est indispensable que les fonds de gorge décrivent des arcs de cercle concentriques à la tige de la clé. De ce fait, l'ébauche doit être montée sur un support d'étaux de taille qui permet de maintenir solidement la tige de l'ébauche tout en lui autorisant un mouvement de rotation sur lui-même.

Un support d'étaux connu de l'art antérieur comprend un étrier rotatif monté sur un châssis fixe. L'étrier se présente sous la forme d'un vilebrequin avec une partie centrale désaxée par rapport à ses extrémités reçues de manière rotative dans des paliers correspondants formés dans le châssis fixe. Pour saisir l'ébauche, un étau est monté sur la partie centrale de l'étrier. Les mâchoires ou mors de l'étau sont orientés de telle manière que la tige de l'ébauche de clé qu'elles saisissent est confondue avec l'axe de rotation de l'étrier. De cette façon, la tige de l'ébauche reste fixe lors de la rotation de l'étrier, seul le panneton décrivant un arc de cercle centré sur la tige de l'ébauche de clé.

Ce support de l'art antérieur présente cependant l'inconvénient de n'être pourvu que d'un seul étau. Or, il existe de nombreux modèles d'ébauches de clé différents pour lesquels un étau spécifique doit être utilisé. Le remplacement d'un étau par un autre sur le même étrier est une opération longue et délicate, car il ne faut pas perdre en précision. L'ébauche doit toujours être positionnée au même endroit par rapport à la fraise. D'autre part, le remplacement du support d'étaux en entier implique un investissement matériel considérable.

La présente invention a pour but de remédier à cet inconvénient en définissant un support d'étaux de taille de clés à gorges adapté à tous les modèles de clé.

Pour ce faire, la présente invention a pour objet un support d'étaux de taille de clés à panneton destiné au maintien et à la manipulation d'une ébauche de clé présentant une tige dotée d'un panneton, ledit support d'étaux comprenant un étrier rotatif dont l'axe de rotation est confondu avec la tige de l'ébauche de clé, caractérisé en ce que l'étrier incorpore un arbre rotatif sur lequel au moins deux étaux sont montés, chaque étau étant doté de deux mâchoires longitudinales auto-centrantes pour le serrage de la tige de l'ébauche de clé, un seul étau étant sélectivement positionné dans une position de taille dans laquelle les mâchoires dudit étau définissent un axe fictif fixe qui se confondent avec l'axe de rotation de l'étrier ainsi qu'avec la tige de l'ébauche de clé lorsque cette dernière est serrée entre les mâchoires. En prévoyant plusieurs étaux sur un même arbre rotatif, lui-même monté sur l'étrier rotatif, on peut par simple rotation dudit arbre rotatif amener l'étau approprié en position de taille. Avantageusement, l'arbre rotatif est pourvu de moyens d'indexation pour bloquer l'arbre porte-étaux en rotation en différentes positions correspondant au positionnement des différents étaux en position de taille. De préférence, l'étrier rotatif comprend deux paliers dans lesquels l'arbre rotatif est reçu, lesdits moyens d'indexation comprenant une cheville filetée solidaire de l'arbre rotatif, sollicitant une bille de blocage dans un cône d'indexation solidaire d'un des deux paliers. Un positionnement aisé, rapide et précis peut ainsi être effectué. Il suffit de prévoir autant de cônes d'indexation que d'étaux.

Selon une forme de réalisation particulièrement avantageuse, l'étrier rotatif est reçu dans un châssis fixe, l'étrier rotatif présentant au moins une surface de contact par roulement ou glissement qui coopère avec au moins un chemin de roulement ou de glissement défini par ledit châssis fixe pour décrire un mouvement d'arc de cercle dont le centre se confond avec l'axe de rotation de l'étrier, de sorte que l'étrier effectue un mouvement de rotation autour de la tige de l'ébauche de clé. L'étrier n'est donc pas solidaire du châssis par des paliers situés de chaque côté des mâchoires de l'étau dans le prolongement de la tige de l'ébauche de clé. Alors que dans les supports d'étau de l'art antérieur, les paliers de l'étrier étaient situés dans l'axe de la tige de l'ébauche de clé, ce qui limitait la taille des clés à tailler, dans la présente invention, les chemins de roulement ou de glissement sont situés hors de l'axe de rotation de l'étrier, de sorte que la tige de l'ébauche de clé est dégagée de part et d'autre. Cette caractéristique permet la taille de clés de n'importe quelle dimension, alors qu'auparavant la dimension de clés était limitée par le débattement entre les paliers. Ainsi, de par la conception même de l'étrier, il est désormais de tailler des clés dont la tige est extrêmement longue.

Selon une première variante, l'étrier est doté d'au moins un patin de glissement définissant au moins une surface de contact par glissement.

Selon une seconde variante, l'étrier est doté de roulettes qui définissent les surfaces de contact par roulement. Avantageusement, le châssis comprend deux éléments de montant latéraux incorporant chacun un logement en arc de cercle définissant un chemin de roulement. Selon une forme pratique, chacun des deux logements se présente sous la forme d'une fenêtre oblongue en arc de cercle présentant deux bords concentriques, l'étrier étant pourvu de deux jeux de quatre roulettes engagées respectivement dans lesdits logements, deux roulettes de chaque jeu étant en contact de roulement avec un bord des fenêtres alors que les deux autres roulettes de chaque jeu sont en contact de l'autre bord. De préférence, les roulettes en contact dudit autre bord des fenêtres sont chacune pourvues d'un axe de rotation réglable dans la direction radiale par rapport à l'axe fictif. Ainsi, l'étrier est parfaitement maintenu sans jeu dans les directions normales à l'axe de rotation. En outre, des moyens d'ajustement sont prévus entre l'étrier et le châssis pour éviter le jeu relatif entre ces deux pièces dans la direction parallèle à l'axe fictif. De préférence, les moyens d'ajustement comprennent une cheville filetée solidaire de l'étrier rotatif qui sollicite une bille en contact de chaque élément de montant.

L'invention sera maintenant décrite plus en détail en référence aux dessins annexés, donnant à titre d'exemple non limitatif, un mode de réalisation de l'invention.

Sur les dessins :
- la figure 1 est une vue de face d'un support d'étaux de taille de clé selon l'invention,
- la figure 2 est une vue latérale du support d'étaux de taille de la figure 1, et
- la figure 3 représente de manière agrandie un détail de réalisation du support d'étaux des figures 1 et 2.

Le support d'étaux de taille selon l'invention comprend essentiellement trois pièces constitutives mobiles les unes par rapport aux autres, à savoir, un châssis fixe 3 destiné à être monté sur une table ou un plan de travail adapté, un étrier rotatif 1 mobile en rotation sur le châssis fixe 1, et un arbre rotatif 2 monté sur l'étrier 1 et doté de plusieurs étaux.

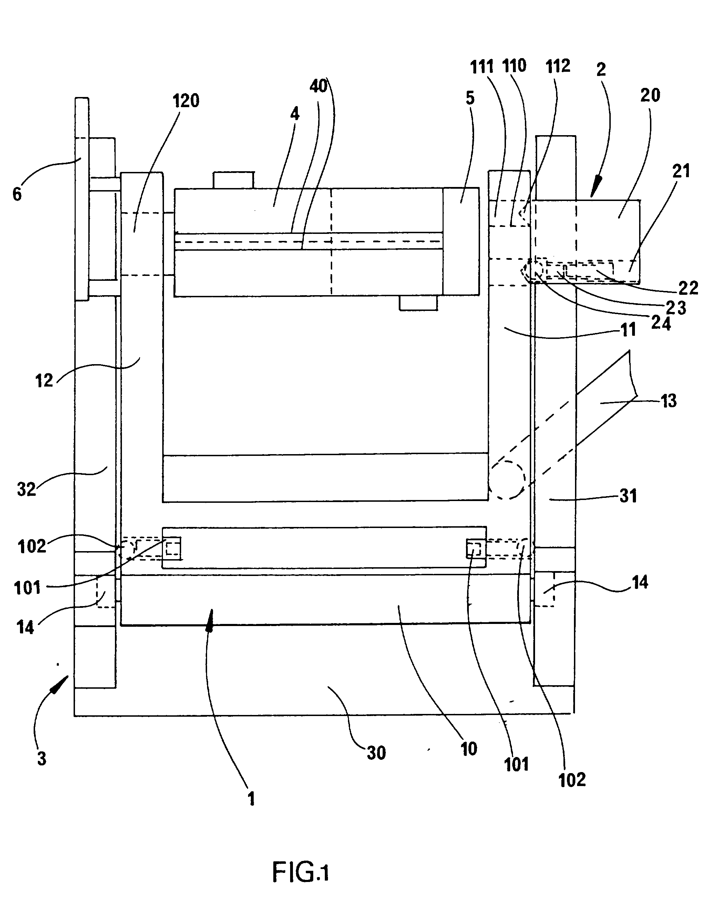

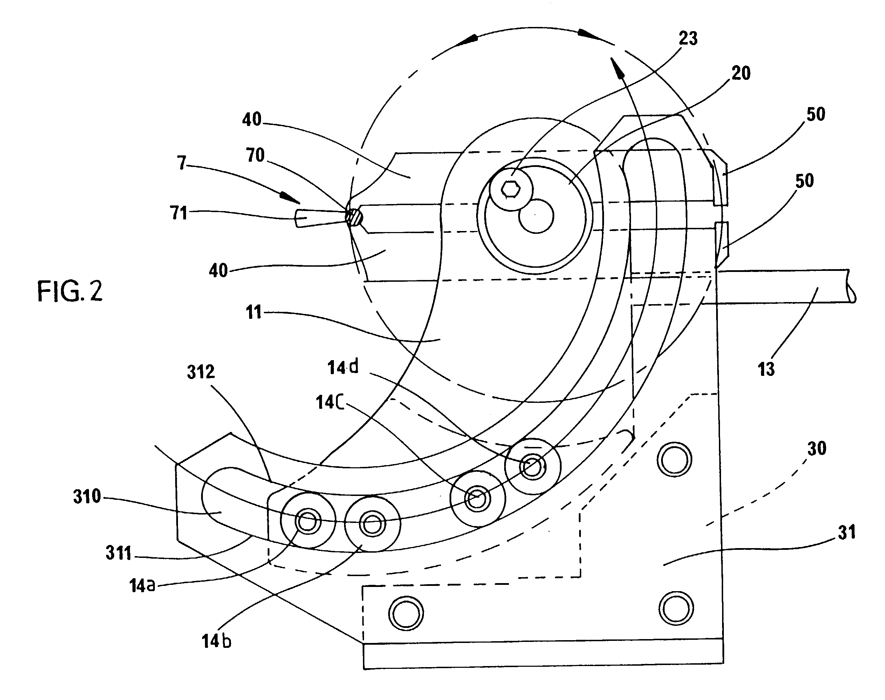

Le châssis fixe peut être réalisé en une seule pièce métallique, mais dans la forme de réalisation préférée, celui-ci comprend une base 30 en aluminium qui forme l'assise du support d'étaux et deux éléments de montants 31, 32 en acier dur tel que de l'acier à outil. Les montants 31 sont vissés ou rivetés sur la base. Il est essentiel que le châssis soit parfaitement stable et robuste, car aucun jeu ne peut être toléré. Les montants 31, 32 s'étendent parallèlement l'un à l'autre et présentent une forme généralement triangulaire, comme on peut le voir sur la figure 2. Selon une caractéristique particulièrement avantageuse de l'invention, chaque montant 31, respectivement 32, incorpore une fenêtre oblongue 310, respectivement 320, en arc de cercle qui présente deux bords arqués concentriques 311, 312, respectivement 321, 322. La figure 1 ne représente pas la fenêtre 320 et la figure 2 est une vue latérale ne laissant voir que le montant 31 dans lequel est formée la fenêtre 310. Il va de soi que le montant 32 visible sur la figure 1 est pourvu d'une fenêtre identique qui est ici désignée 320, bien que non représentée. La distance qui sépare les deux bords est donc constante dans la direction radiale de l'arc de cercle qu'ils décrivent. Les deux fenêtres 310, 320 des montants sont alignées l'une sur l'autre et définissent ainsi un chemin de roulement pour l'étrier rotatif 1.

L'étrier est ainsi capable d'effectuer un mouvement de rotation autour d'un axe de rotation fixe. L'étrier rotatif se présente sous la forme d'un chariot, par exemple en aluminium, doté de roulettes latérales désignées dans leur ensemble par 14. Les roulettes font saillie latéralement sur le chariot en lui-même à l'intérieur des fenêtres du châssis 3. Pour cela, les roulettes 14 sont orientées sur l'étrier 1 selon une ligne qui définit un arc de cercle identique à celui des fenêtres 310, 320. Avantageusement, les roulettes sont au nombre de huit réparties en deux jeux de quatre roulettes de chaque côté de l'étrier. Chaque jeu comprend deux roulettes d'extrémité 14a, 14d et deux roulettes médianes 14b, 14c. Selon l'invention, les roulettes d'extrémité 14a, 14d sont en contact de roulement avec le bord extérieur 311, 321 des fenêtres, alors que les roulettes 14b, 14c sont en contact de roulement avec le bord intérieur 312, 322 des fenêtres. Cela permet d'éliminer tout jeu qu'il pourrait y avoir entre le châssis 3 et l'étrier dans les directions normales à l'axe de rotation de l'étrier. Pour permettre un tel positionnement de roulettes, il est prévu que les axes de rotation des roulettes 14b, 14c sont réglables dans la direction radiale. En pratique, les axes des roulettes 14b, 14c sont montés sur des excentriques réglables.

En solidarisant l'étrier au châssis de la manière décrite, l'axe de rotation de l'étrier est entièrement dégagé, en ce sens que l'étrier ne comporte aucun point situé sur son axe de rotation. L'étrier peut donc effectuer un mouvement de rotation sans intersecter son axe de rotation. On verra par la suite que cette caractéristique est particulièrement avantageuse.

La présente forme de réalisation met en oeuvre des roulettes prisonnières d'un chemin de roulement en arc de cercle. Une autre forme de réalisation possible peut prévoir un chemin de glissement solidaire du châssis sur lequel pourrait glisser en rotation un patin de glissement solidaire de l'étrier. On pourrait utiliser pour la semelle du patin un matériau connu par ses faibles forces de frottement. L'utilisation d'un chemin de glissement ou de roulement, contrairement à l'étrier de l'art antérieur, permet de dégager entièrement l'axe de rotation de l'étrier.

L'étrier comprend également des moyens 101, 102 pour éliminer le jeu entre l'étrier et le châssis dans la direction de l'axe de rotation. Ces moyens comprennent une bille 102 sollicitée par une vis contre une paroi interne de chaque montant 31, 32. Ainsi, l'étrier peut être parfaitement stable en rotation par rapport au châssis.

L'étrier présente une forme générale en U avec une pièce de base 10 sur laquelle sont montées les roulettes 14 et les moyens de rattrapage de jeu 101, 102, et deux branches latérales 11, 12 qui s'étendent parallèlement à proximité des montants 31, 32. Pour le déplacement en rotation de l'étrier 1, un levier d'actionnement 13 est prévu. En outre, la branche 12 supporte une came d'écartement 6 qui sert à écarter la fraise du panneton fraisé en fin d'opération de taille. Selon une caractéristique essentielle de l'invention, l'arbre 2 est monté rotatif sur l'étrier 1 et comprend plusieurs étaux 4, 5 présentant des mâchoires respectives 40, 50 destinées à serrer la tige 70 de l'ébauche de clé 7, comme on peut le voir sur la figure 2. Les mâchoires sont du type à déplacement auto-centré en ce sens que les deux mâchoires d'un même étau se déplacent simultanément d'une même distance lors du serrage ou du desserrage de l'étau, c'est-à-dire les mâchoires se déplacent de manière équidistante autour d'un axe fictif (représenté en lignes pointillées sur la figure 1). L'arbre est logé dans des paliers 110, 120 formés respectivement dans les branches 11 et 12 de l'étrier 1. Chaque étau 4, 5 est sélectivement positionnable dans une position dite de taille dans laquelle l'axe fictif fixe des mâchoires 40, 50 est confondu avec l'axe de la tige 70 d'ébauche de clé lui-même confondu avec l'axe de rotation de l'étrier 1. Dans cette position, la tige de l'ébauche de clé reste statique lors de la rotation de l'étrier. La tige 70 reste statique, mais le panneton 71 subit un mouvement de rotation en arc de cercle centré sur sa tige 70. Cela permet, lors du travail de fraise pour dégager les gorges, de faire pivoter le panneton pour conférer aux fonds des gorges un profil en arc de cercle. Selon l'invention, au moins deux étaux montés sur l'arbre 2 peuvent être amenés sélectivement dans la position dite de taille.

Pour ce faire, il est nécessaire que l'arbre puisse être bloqué en rotation en autant de positions qu'il y a d'étaux. Toujours pour des raisons de précision de taille, il est indispensable que le blocage de l'arbre soit stable et résistant.

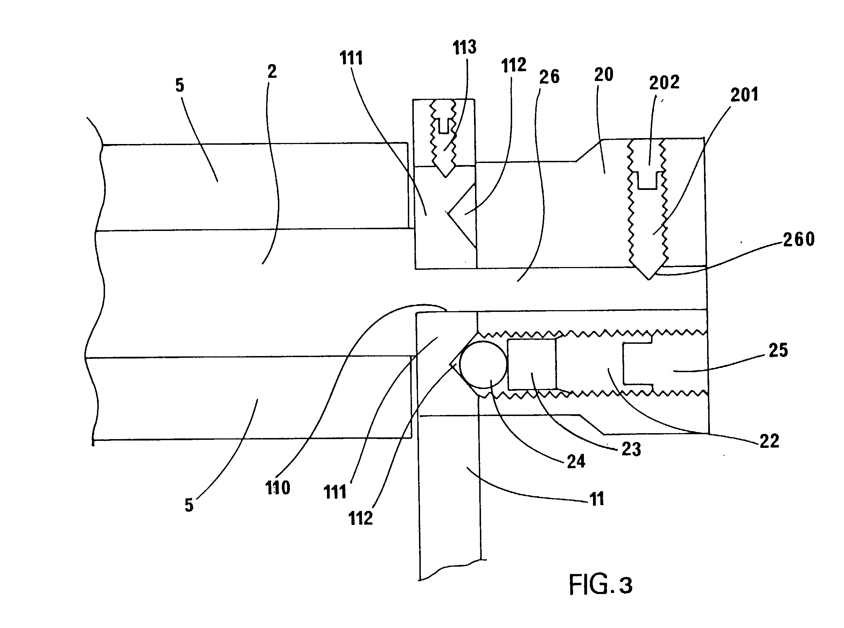

En se référant maintenant à la figure 3, on a représenté un dispositif d'indexation permettant de positionner sélectivement chaque étau de l'arbre en position de taille. Uniquement l'extrémité droite de l'arbre a été représentée, car elle incorpore le dispositif d'indexation. L'arbre comprend une partie d'extrémité 25 de section réduite par rapport à celle au niveau des étaux 4, 5. Cette partie d'extrémité traverse la branche 11 de l'étrier qui forme à cet endroit un palier 110. La partie d'extrémité 25 se prolonge de l'autre côté du palier 110 où elle est pourvue d'une molette d'actionnement 20. Pour fixer la molette 20 sur la partie d'extrémité 25, un cône de blocage 250 formé dans la partie d'extrémité 25 reçoit une vis à pointe conique 201 qui est engagée dans un logement fileté 202 pratiqué radialement dans la molette 20. La molette 20 est en outre réalisée avec un autre logement fileté 25 qui s'étend parallèlement à l'axe de rotation de l'arbre 2, mais de façon désaxé. Le logement 25 traverse de part en part de la molette 20 pour déboucher sur une couronne 111 qui est montée dans un logement formé dans la branche 11 de l'étrier. La couronne 111 est réalisée dans un matériau dur tel que l'acier à outil, car elle est soumise à de grandes contraintes. La couronne 111 est maintenue fixement dans la branche 11 à l'aide d'une vis 113. La couronne 111 forme avec son alésage central la portée du palier 110. La couronne 111 comprend en outre une pluralité d'évidements coniques 112 dits cônes d'indexation répartis sur la face plane adjacente à la molette 20. Le nombre et l'écart angulaire de ces cônes 112 sont déterminés par le nombre et la disposition des étaux autour de l'arbre 2. Dans la forme de réalisation représentée, les étaux 4, 5 sont disposés de manière diamétralement opposée sur l'arbre 2. Par conséquent, deux cônes d'indexation 112 sont pratiqués de manière identique dans la couronne 111.

Pour définir une position, le logement fileté 25 est placé en regard d'un de ces cônes 112. Pour le blocage en position de taille, une bille 24 sollicitée par une vis 22 en prise filetée dans le logement 25 est appuyée dans un des cônes 112. De préférence, un tampon de protection 23 est intercalé entre la vis 22 et la bille 24 pour protéger cette dernière. L'enfoncement de la bille dans le cône assure un blocage en rotation parfait de l'arbre 2. De plus, la recherche de la position de taille se fait automatiquement dès que la bille pénètre dans le cône. Par simple de vissage de la vis 22, l'arbre est à nouveau libre en rotation et peut être repositionné de manière à présenter un autre étau en position de taille.

Grâce à ce dispositif d'indexation, les différents étaux montés sur l'arbre 2 peuvent être sélectivement bloqués dans la position adéquate à la taille de l'ébauche de clé.

En variante, la molette peut comprendre autant de logements 25 qu'il y a d'étaux et un seul cône d'indexation. Le résultat obtenu est strictement le même.

Dans la forme de réalisation représenté, deux étaux sont montés sur l'arbre. Bien entendu, on peut prévoir plus de deux étaux avec des dispositions en étoile autour de l'arbre. Dans le cas d'un arbre à six étaux, des cônes d'indexation pourront être prévus tous les 60°.

L'accessoire de taille qui vient d'être décrit constitue une forme de réalisation préférée. Il est à noter que ce dispositif d'indexation ou une de ces variantes peut tout à fait être mise en oeuvre sur un étrier classique de l'art antérieur tel que celui décrit précédemment.

## Revendications

1. Support d'étaux de taille de clés à panneton destiné au maintien et à la manipulation d'une ébauche de clé (7) présentant une tige (70) dotée d'un panneton (71), ledit support d'étaux comprenant un étrier rotatif (1) dont l'axe de rotation est confondu avec la tige (70) de l'ébauche de clé (7), caractérisé en ce que l'étrier (1) incorpore un arbre rotatif (2) sur lequel au moins deux étaux (4, 5) sont montés, chaque étau étant doté de deux mâchoires longitudinales auto-centrantes (40, 50) pour le serrage de la tige (70) de l'ébauche de clé, un seul étau (4 ou 5) étant sélectivement positionné dans une position de taille dans laquelle les mâchoires (40, 50) dudit étau définissent un axe fictif fixe qui se confond avec l'axe de rotation de l'étrier, ainsi qu'avec la tige (70) de l'ébauche de clé lorsque cette dernière est serrée entre les mâchoires.

2. Support d'étaux de taille selon la revendication 1, dans lequel l'étrier rotatif (1) est reçu dans un châssis fixe (3), l'étrier rotatif présentant au moins une surface de contact (14) par roulement ou glissement qui coopère avec au moins un chemin de roulement ou de glissement (310, 320) défini par ledit châssis fixe (3) pour décrire un mouvement d'arc de cercle dont le centre se confond avec l'axe de rotation de l'étrier, de sorte que l'étrier effectue un mouvement de rotation autour de la tige (70) de l'ébauche de clé.

3. Support d'étaux de taille selon la revendication 1 ou la revendication 2, dans lequel l'arbre rotatif est pourvu de moyens d'indexation (22, 24, 112) pour bloquer l'arbre porte-étau (2) en rotation en différentes positions correspondant au positionnement des différents étaux en position de taille.

4. Support d'étaux de taille selon la revendication 3, dans lequel l'étrier rotatif (1) comprend deux paliers (110, 120) dans lesquels l'arbre rotatif (2) est reçu, lesdits moyens d'indexation comprenant une cheville filetée (22) solidaire de l'arbre rotatif (2), sollicitant une bille de blocage (24) dans un cône d'indexation (112) solidaire d'un des deux paliers (110).

5. Support d'étaux de taille selon la revendication 4, dans lequel l'étrier (1) est doté de roulettes (14) qui définissent les surfaces de contact par roulement.

6. Support d'étaux de taille selon la revendication 5, dans lequel l'étrier (1) est doté d'au moins un patin de glissement définissant au moins une surface de contact par glissement.

7. Support d'étaux de taille selon la revendication 5, dans lequel le châssis (3) comprend deux éléments de montant latéraux (31, 32) incorporant chacun un logement (310, 320) en arc de cercle définissant un chemin de roulement.

8. Support d'étaux de taille selon la revendication 7, dans lequel chacun des deux logements (310, 320) se présente sous la forme d'une fenêtre oblongue en arc de cercle présentant deux bords concentriques (311, 312), l'étrier étant pourvu de deux jeux de quatre roulettes (14a, 14b, 14c, 14d) engagées respectivement dans lesdits logements, deux roulettes de chaque jeu étant en contact de roulement avec un bord (311) des fenêtres alors que les deux autres roulettes (14b, 14c) de chaque jeu sont en contact de l'autre bord (312).

9. Support d'étaux de taille selon la revendication 8, dans lequel les roulettes (14b, 14c) en contact dudit autre bord (312) des fenêtres sont chacune pourvues d'un axe de rotation réglable dans la direction radiale par rapport à l'axe fictif.

10. Support d'étaux de taille selon l'une quelconque des revendications 4 à 9, dans lequel des moyens d'ajustement (101, 102) sont prévus entre l'étrier (1) et le châssis (3) pour éviter le jeu relatif entre ces deux pièces dans la direction parallèle à l'axe fictif.

11. Support d'étaux de taille selon la revendication 10, dans lequel les moyens d'ajustement comprennent une cheville filetée solidaire (101) de l'étrier rotatif (1) qui sollicite une bille (102) en contact de chaque élément de montant (31, 32).
